# EUROPÄISCHE PATENTSCHRIFT

(11) **EP 1 225 428 B1**
(45) Veröffentlichungstag und Bekanntmachung des Hinweises auf die Patenterteilung: **05.04.2006**
(21) Anmeldenummer: 02000643.3
(22) Anmeldetag: 11.01.2002
(51) Int. Cl.: G01D 5/347, G01B 21/22

(54) **Winkelmesssystem**
Angle measuring system
Système de mesure d'angles

(30) Priorität: 23.01.2001 DE 10102957
(43) Veröffentlichungstag der Anmeldung: 24.07.2002
(73) Patentinhaber: Dr. Johannes Heidenhain GmbH, 83292 Traunreut (DE)
(72) Erfinder: Lahr, Johann, 83374 Traunwalchen (DE)

(56) Entgegenhaltungen:
- EP-A- 0 762 081
- DE-U- 8 812 317
- DE-U- 8 915 109
- JP-U- 62 156 822
- PATENT ABSTRACTS OF JAPAN vol. 1997, no. 03, 31. März 1997 (1997-03-31) & JP 08 284971 A (ISHIKAWAJIMA HARIMA HEAVY IND CO LTD), 1. November 1996 (1996-11-01)

## Beschreibung

Die Erfindung betrifft ein Winkelmeßsystem nach dem Oberbegriff des Anspruches 1.

Winkelmeßsysteme werden beispielsweise eingesetzt, um die Winkeistellung einer Motorwelle zu erfassen. Das Winkelmeßsystem weist dazu in seinem Gehäuse einen rotierenden Teil (Rotor) und einen statischen Teil (Stator) auf. Der Rotor wird an der Motorwelle befestigt, so daß er allen Bewegungen der Welle folgt und sich mit der Welle relativ zum Stator dreht. Der Rotor trägt eine Teilung, die durch eine am Stator befestigte Abtasteinheit des Winkelmeßsystemes abgetastet wird und deren Signale zur Berechnung der Winkelstellung der Welle verwendet werden.

Die Abtasteinheit und damit der Stator muß dabei so gelagert sein, daß sie gegenüber dem Rotor drehstarr mit dem Motorgehäuse verbunden ist. Jede Drehbewegung des Stators würde zu einem Fehler in der Messung der Winkelstellung führen. Axialen und radialen Bewegungen der Welle sollte der Stator aber folgen können. So wird sichergestellt, daß sich der Abstand zwischen rotierender Teilung und Abtasteinheit nicht ändert und eine konstante Signalqualität erzielt wird. Erreicht wird dies, indem zwischen dem Stator und der fest mit dem Motorgehäuse verbundenen Basis des Winkelmeßsystemes eine entsprechende Kupplung vorgesehen wird. Die Basis kann dabei Teil des Gehäuses des Winkelmeßsystemes sein.

Ein Winkelmeßsystem mit einer solchen Kupplung ist beispielsweise in der DE29911508U1 beschrieben. Bei der Anwendung solcher Winkelmeßsysteme werden Toleranzen für die maximalen Auslenkungen der Motorwelle in radialer und axialer Richtung vorgegeben. Werden diese Überschritten, droht eine Zerstörung der Kupplung, da diese aus einem biegsamen geformten Blechteil besteht.

Ein Winkelmeßsystem mit einer Kupplung aus biegsamen Blechteilen ist auch in der Japanischen Gebrauchsmuster-Offenlegung 62-156822 beschrieben. Dort wird vorgesehen, die durch die Kupplung erlaubten axialen Bewegungen über einen Anschlag zu begrenzen. Die verwendete Kupplung erlaubt aber nur axiale Bewegungen, die durch den aus zusätzlichen Bauteilen und damit aufwendig konstruierten Anschlag begrenzt werden.

Aufgabe der Erfindung ist es daher, ein Winkelmeßsystem anzugeben, das durch einfach konstruierte Anschläge die radialen und axialen Bewegungen des Stators begrenzt und so eine Beschädigung der Kupplung zwischen Stator und Basis verhindert.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Die Erfindung besteht darin, daß Anschläge an der Basis und am Stator des Winkelmeßsystemes die radialen und axialen Bewegungen des Stators so begrenzen, daß die Kupplung zwischen dem Stator und der Basis nicht beschädigt werden kann. Die Anschläge in axialer und einer radialen Richtung werden dabei durch Schrauben erzeugt, mit denen einerseits die Kupplung an vorspringenden Stegen der Basis befestigt ist, und die andererseits in Bohrungen passender Größe im Stator ragen. Die Anschläge in einer weiteren radialen Richtung werden durch die vorspringenden Stege der Basis selbst gebildet. Somit erhält man Anschläge für radiale und axiale Bewegungen des Stators relativ zur Basis, ohne zusätzliche Bauteile zu verwenden.

Weitere Vorteile sowie Einzelheiten der vorliegenden Erfindung ergeben sich aus der nachfolgenden Beschreibung einer bevorzugten Ausführungsform anhand der Figuren. Es zeigt
- Figur 1: ein Winkelmeßsystem an einem Motor
- Figur 2: Basis, Stator und Kupplung des Winkelmeßsystemes.

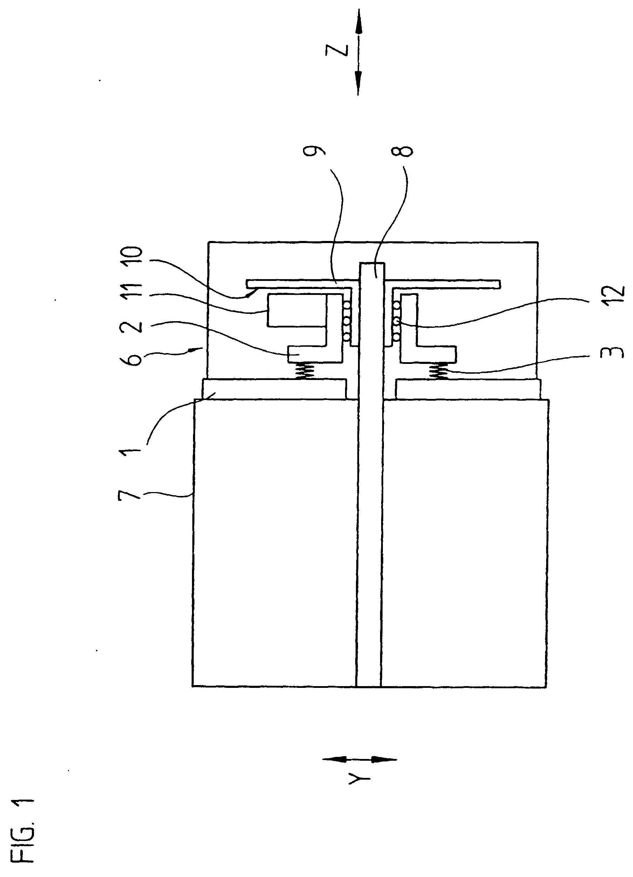

In Figur 1 ist die Basis 1 des Winkelmeßsystemes 6 mit dem Gehäuse eines Motors 7 verbunden, dessen Welle 8 in das Winkelmeßsystem 6 ragt. Der Rotor 9 des Winkelmeßsystemes 6 ist auf die Welle 8 aufgesteckt und drehstarr befestigt. Auf dem Rotor 9 befindet sich eine Teilung 10, die von einer Abtasteinheit 11 abgetastet wird. Die Abtasteinheit 11 ist weiter auf einem Stator 2 befestigt und liefert die Information über die Winkelstellung der Welle 8. Um den Abtastabstand zischen Abtasteinheit 11 und Teilung 10 auf Rotor 9 konstant zu halten, muß der Stator 2 axialen und radialen Bewegungen der Welle 8 folgen können, die über ein Lager 12 auf den Stator 2 übertragen werden. Drehbewegungen der Welle 8 gegenüber der Basis 1 darf der Stator 2 jedoch nicht folgen, da sonst die Messung der Winkeistellung der Welle 8 verfälscht würde. Der Stator 2 ist daher über eine lediglich schematisch dargestellte Kupplung 3 an der Basis befestigt, die zwar radiale und axiale Bewegungen des Stators erlaubt, aber ansonsten eine drehstarre Verbindung zwischen Basis 1 und Stator 2 darstellt. Eine solche Kupplung 3 ist in der eingangs erwähnten DE29911508U1 beschrieben, es sei dort insbesondere auf Figur 3 verwiesen.

Dem Anwender des Winkelmeßsystemes 6 werden Maximalwerte für radiale und axiale Bewegungen der Welle 8 vorgegeben. Sollten diese aus irgend welchen Gründen einmal doch überschritten werden, so ist es vorteilhaft, durch Anschläge die Beweglichkeit des Stators 2 zu begrenzen, um Beschädigungen der Kupplung 3 zu vermeiden.

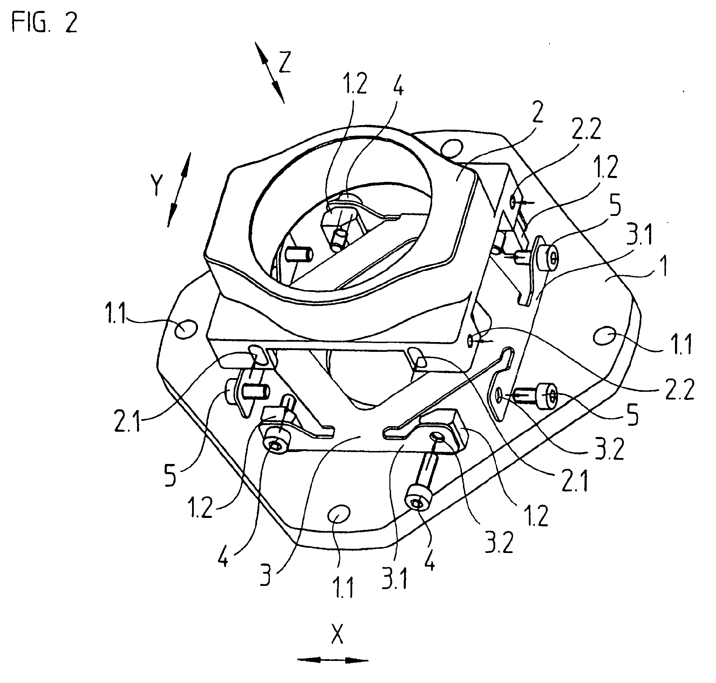

Figur 2 zeigt daher die erfindungsgemäße Befestigung der Kupplung 3 an der Basis 1, durch die sich solche Anschläge ohne zusätzliche Bauteile ergeben. Die Kupplung 3 besteht aus einem gestanzten und gebogenen Blechteil, an dem Laschen 3.1 abgebogen und mit Bohrungen 3.2 versehen sind. Durch diese Bohrungen 3.2 wird die Kupplung 3 mittels erster Schrauben 4 mit vier vorspringenden Stegen 1.2 der Basis 1 verschraubt, und mittels zweiter Schrauben 5 mit vier Bohrungen 2.2 am Stator 2 verschraubt. Die ersten Schrauben 4 ragen über die Stege 1.2 hinaus in Öffnungen 2.1 im Stator 2. Die Öffnungen 2.1 sind so dimensioniert, daß sie eine Verschiebung des Stators 2 gegenüber der Basis 1 erlauben, bis der Rand einer Öffnung 2.1 an einer ersten Schraube 4 anschlägt. Die Öffnungen 2.1 können etwa die Form von Langlöchern aufweisen. Die Beweglichkeit des Stators 2 gegenüber der Basis 1 ist somit in axialer Richtung Z und in einer radialen Richtung X durch Anschläge begrenzt.

Eine weitere Begrenzung der Beweglichkeit des Stators 2 in einer zweiten radialen Richtung Y erhält man, indem der Abstand der vorspringenden Stege 1.2 der Basis 1 zum Stator 2 so gewählt wird, daß der Stator 2 an den Stegen 1.2 anschlägt, wenn er seine maximal erlaubte Auslenkung in Richtung Y erreicht. Die ersten Schrauben 4 müssen also lang genug sein, um diesen Abstand zwischen den Stegen 1.2 und dem Stator 2 zu überbrücken und in die Öffnungen 2.1 des Stators 2 zu ragen.

Man erhält durch die beschriebene Befestigung der Kupplung 3 an der Basis 1 Anschläge für Auslenkungen des Stators 2 in axialer und radialer Richtung, ohne zusätzliche Bauteile zu benötigen. Stator 2 und Kupplung 3 sind dabei sehr einfach zu montieren.

In einer nicht gezeigten Abwandlung der Erfindung ist es natürlich auch möglich, Anschläge zu bilden, indem die zweiten Schrauben 5 in nicht gezeichnete Öffnungen der Basis 1 ragen.

Die durch die Anschläge vorgegebene Bewegungsfreiheit des Stators 2 gegenüber der Basis 1 wird man vorteilhafter Weise größer wählen als die für das Winkelmeßsystem gegenüber einem Kunden spezifizierten Toleranzen für die radialen und axialen Wellenbewegungen, da im Falle eines Anschlages Kräfte etwa vom Lager 12 der Welle 8 im Stator 2 aufgenommen werden müssen, und dieses nicht im Normalbetrieb auftreten sollte.

## Patentansprüche

1. Winkelmeßsystem mit einer Basis (1), einem Stator (2) und einer Kupplung (3) zur drehstarren Verbindung der Basis (1) mit dem Stator (2), wobei die Kupplung (3) radiale und axiale Ausgleichsbewegungen des Stators (2) gegenüber der Basis (1) erlaubt, **dadurch gekennzeichnet, daß** Anschläge an der Basis (1) und am Stator (2) die Ausgleichsbewegungen begrenzen.

2. Winkelmeßsystem nach Anspruch 1, **dadurch gekennzeichnet, daß** die Kupplung (3) einstückig als Stanz- und Biegeteil gefertigt ist.

3. Winkelmeßsystem nach Anspruch 1 oder 2, **dadurch gekennzeichnet, daß** die Kupplung (3) mittels erster Schrauben (4) an der Basis (1) und mittels zweiter Schrauben (5) am Stator (2) befestigt ist.

4. Winkelmeßsystem nach Anspruch 3, **dadurch gekennzeichnet, daß** wenigstens einer der Anschläge **dadurch** gebildet ist, daß eine der ersten Schrauben (4) in eine Öffnung (2.1) des Stators (2) ragt.

5. Winkelmeßsystem nach Anspruch 3, **dadurch gekennzeichnet, daß** wenigstens einer der Anschläge **dadurch** gebildet ist, daß eine der zweiten Schrauben (5) in eine Öffnung der Basis (1) ragt.

6. Winkelmeßsystem nach Anspruch 4 oder 5, **dadurch gekennzeichnet, daß** die Öffnung (2.1) als Langloch ausgebildet ist.

7. Winkelmeßsystem nach einem der vorhergehenden Ansprüche, **dadurch gekennzeichnet, daß** wenigstens einer der Anschläge durch einen vorspringenden Steg (1.2) an der Basis (1) gebildet ist.

8. Winkelmeßsystem nach Anspruch 7, **dadurch gekennzeichnet, daß** an dem vorspringenden Steg (1.2) der Basis (1) die Kupplung (3) mit einer der ersten Schrauben (4) verschraubt ist.

## Claims

1. Angle measuring system with a base (1), a stator (2) and a coupling (3) for rigid connection of the base (1) to the stator (2), wherein the coupling (3) permits radial and axial compensating movements of the stator (2) relative to the base (1), **characterised in that** stops on the base (1) and on the stator (2) restrict the compensating movements.

2. Angle measuring system according to Claim 1, **characterised in that** the coupling (3) is produced in one piece as a stamped or bent part.

3. Angle measuring system according to Claim 1 or 2, **characterised in that** the coupling (3) is fastened to the base (1) by means of first screws (4) and to the stator (2) by means of second screws (5).

4. Angle measuring system according to Claim 3, **characterised in that** at least one of the stops is formed by one of the first screws (4) projecting into an opening (2.1) of the stator (2).

5. Angle measuring system according to Claim 3, **characterised in that** at least one of the stops is formed by one of the second screws (5) projecting into an opening of the base (1).

6. Angle measuring system according to Claim 4 or 5, **characterised in that** the opening (2.1) is configured as an elongated hole.

7. Angle measuring system according to one of the preceding claims, **characterised in that** at least one of the stops is formed on the base (1) by a projecting bar (1.2).

8. Angle measuring system according to Claim 7, **characterised in that** the coupling (3) is screwed to the projecting bar (1.2) of the base (1) with one of the first screws (4).

## Revendications

1. Système de mesure d'angles comportant une base (1), un stator (2) et un accouplement (3) qui relie de manière rigide en rotation la base (1) au stator (2), l'accouplement (3) permettant des déplacements de compensation radiaux et axiaux du stator (2) par rapport à la base (1), **caractérisé par le fait que** des butées prévues sur la base (1) et sur le stator (2) limitent les déplacements de compensation.

2. Système de mesure d'angles selon la revendication 1, **caractérisé par le fait que** l'accouplement (3) est réalisé d'une pièce sous forme d'un élément découpé à la presse et plié.

3. Système de mesure d'angles selon la revendication 1 ou 2, **caractérisé par le fait que** l'accouplement (3) est fixé à la base (1) au moyen de premières vis (4) et au stator (2) au moyen de deuxièmes vis (5).

4. Système de mesure d'angles selon la revendication 3, **caractérisé par le fait qu'**au moins une des butées est formée par une des premières vis (4) qui fait saillie dans une ouverture (2.1) du stator (2).

5. Système de mesure d'angles selon la revendication 3, **caractérisé par le fait qu'**au moins une des butées est formée par une des deuxièmes vis (5) qui fait saillie dans une ouverture de la base (1).

6. Système de mesure d'angles selon la revendication 4 ou 5, **caractérisé par le fait que** l'ouverture (2.1) est conformée en trou oblong.

7. Système de mesure d'angles selon une des revendications précédentes, **caractérisé par le fait qu'**au moins une des butées est formée par une barrette (1.2) faisant saillie sur la base (1).

8. Système de mesure d'angles selon la revendication 7, **caractérisé par le fait que** l'accouplement (3) est vissé à la barrette (1.2) en saillie au moyen de l'une des premières vis (4).
